# EUROPEAN PATENT APPLICATION

(11) **EP 4 808 032 A1**
(43) Date of publication of application: **16.09.2026**
(21) Application number: 24895806.8
(22) Date of filing: 23.08.2024
(51) Int. Cl.: H04L 5/00

(54) **COMMUNICATION METHOD AND COMMUNICATION APPARATUS**

(30) Priority: 30.11.2023 CN 202311640778
(71) Applicant: Huawei Technologies Co., Ltd., Shenzhen, Guangdong 518129 (CN)
(72) Inventor: YANG, Zhen, Shenzhen, Guangdong 518129 (CN); LOU, Qunfang, Shenzhen, Guangdong 518129 (CN); WANG, Zhiying, Shenzhen, Guangdong 518129 (CN); SHI, Ming, Shenzhen, Guangdong 518129 (CN)
(74) Representative: Gill Jennings & Every LLP
(86) International application number: PCT/CN2024/114162
(87) International publication number: WO 2025/112705

(57) **Abstract**

Embodiments of this application provide a communication method and a communication apparatus to mitigate pilot contamination among terminal devices. The method includes: sending first information, where the first information indicates pilots corresponding to a plurality of terminal devices in a first user group, the pilots corresponding to the plurality of terminal devices in the first user group are mutually orthogonal, and the plurality of terminal devices in the first user group include terminal devices in at least two cells.

## Description

This application claims priority to Chinese Patent Application No. 202311640778.4, filed with the China National Intellectual Property Administration on November 30, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In massive multiple-input multiple-output (multiple-input multiple-output, MIMO), due to increasing users in an area, mutually orthogonal pilot sequences cannot accommodate all users in the area. Consequently, non-orthogonal pilot sequences may be used across different cells. When obtaining channel information of terminals in a local cell, a base station may also obtain channel information of terminals in another cell. Consequently, information about other terminals is superimposed on channel estimation performed by the base station on the local cell, resulting in pilot contamination. The pilot contamination deviates signal processing performed by the base station and generates interference between cells, severely hindering system performance improvement.

### SUMMARY

This application provides a communication method and a communication apparatus, to mitigate pilot contamination among terminal devices.

According to a first aspect, a communication method is provided. The method is performed by a control device, or the method is performed by some components (for example, a processor, a chip, or a chip system) in the control device, or the method may be implemented by a logic module or software that can implement all or some functions of the control device. The control device is a device in an access network. The control device may be a network device including a BBU, a CU, or a BBH. Alternatively, the control device is a BBU, a CU, or a BBH. The method is performed by one control device (referred to as a target control device below) in a plurality of control devices. The plurality of control devices are control devices having a collaboration relationship. The plurality of control devices may be deployed in the same equipment room or different equipment rooms. This is not limited herein.

The method includes: The control device sends first information, where the first information indicates pilots corresponding to a plurality of terminal devices in a first user group, the pilots corresponding to the plurality of terminal devices in the first user group are mutually orthogonal, and the plurality of terminal devices in the first user group include terminal devices in at least two cells. The pilot may also be referred to as pilot information, a pilot signal, a reference signal (reference signal, RS), a reference sequence, a pilot sequence, or the like. The pilot may be used for channel measurement or channel estimation. Therefore, whether pilot contamination exists can affect accuracy of channel estimation, and further affect signal demodulation performance.

In embodiments of this application, the terminal devices in the at least two cells are grouped to obtain a plurality of user groups, and pilots of terminal devices in each user group are mutually orthogonal. Therefore, pilot contamination can be mitigated, accuracy of channel estimation can be ensured, and then demodulation performance can be improved. In addition, the terminal devices in the user group in embodiments of this application are not limited to terminal devices in the same cell, but may be from different cells. Therefore, pilot contamination among terminal devices in different cells can be mitigated.

In a possible implementation, terminal devices in the same user group are terminal devices with high channel correlation, strong interference, or a short distance to each other. Therefore, terminal devices with mutual interference are grouped into the same user group, and orthogonal pilots are allocated to terminal devices in the same user group, so that pilot contamination among terminal devices that originally have severe mutual interference can be mitigated.

In a possible implementation, the control device sends second information, where the second information indicates a control device associated with the first user group, and the control device is configured to process an uplink signal of a terminal device in the associated first user group. The second information may be sent to a radio frequency device. Therefore, the radio frequency device can send, based on an association relationship between the user group and the control device, an uplink signal from the terminal device to the control device associated with the terminal device. In this way, the control device can demodulate the uplink signal of the terminal device on a per-user-group basis, and interaction between control devices is not required, thereby reducing latency and improving gains.

In a possible implementation, the method further includes: sending third information, where the first information indicates the terminal devices included in the first user group. The third information may be sent to another collaborative control device, so that the control device can identify terminal devices in the same user group, and demodulate uplink signals of the terminal devices on a per-user-group basis.

In a possible implementation, the method further includes: receiving uplink signals of a plurality of terminal devices in an associated second user group; and performing joint demodulation on the uplink signals of the plurality of terminal devices in the second user group. The uplink signals of the terminal devices may include a signal received from a radio frequency device corresponding to a serving cell, and may further include a signal received from a radio frequency device corresponding to a cooperating cell. The control device can obtain, from the radio frequency device, uplink signals of terminal devices in the same user group, so that the uplink signals of the terminal devices can be demodulated on a per-user-group basis without interaction with another control device. In this way, processing latency can be reduced.

In a possible implementation, the method further includes: obtaining channel measurement information corresponding to terminal devices in a plurality of cells; and determining the plurality of terminal devices in the first user group based on the channel measurement information. The channel measurement information includes, for example, at least one of reference signal received power (reference signal received power, RSRP), sounding reference signal (sounding reference signal, SRS) measurement information, positioning reference signal (positioning reference signal, PRS) (including uplink PRS (UL-PRS) or downlink PRS (DL-PRS)) measurement information, and channel state information reference signal (channel state information reference signal, CSI-RS) measurement information. The control device may group, into the same user group based on the channel measurement information, terminal devices with high channel correlation/strong interference/a short distance to each other in the plurality of terminal devices, thereby mitigating pilot contamination among terminal devices that originally have severe mutual interference.

According to a second aspect, a communication method is provided. The method includes: receiving first information, where the first information indicates pilots corresponding to a plurality of terminal devices in a first user group, the pilots corresponding to the plurality of terminal devices in the first user group are mutually orthogonal, and the plurality of terminal devices in the first user group include terminal devices in at least two cells.

In a possible implementation, the method further includes: receiving second information, where the second information indicates a control device associated with the first user group, and the control device is configured to process an uplink signal of a terminal device in the associated first user group.

In a possible implementation, the method further includes: receiving a first uplink signal of a terminal device in the user group; and sending a second uplink signal to the control device associated with the terminal device, where the second uplink signal is obtained based on the first uplink signal.

In a possible implementation, the method further includes: sending fourth information, where the fourth information indicates a pilot corresponding to a terminal device in the user group. Therefore, the terminal device can send an uplink signal by using a corresponding pilot, thereby improving accuracy of uplink channel estimation and improving performance of demodulating the uplink signal.

According to a third aspect, an embodiment of this application provides a communication apparatus. The communication apparatus has a function of implementing behavior in the method embodiment of the first aspect. For beneficial effects, refer to the descriptions of the first aspect. Details are not described herein again. The communication apparatus may be the terminal device in the first aspect, or the communication apparatus may be an apparatus, for example, a chip or a chip system, that can support the terminal device in the first aspect in implementing a function required by the method provided in the first aspect.

In a possible design, the communication apparatus includes a corresponding means (means) or module for performing the method in the first aspect. For example, the communication apparatus includes a processing unit (sometimes also referred to as a processing module) and/or a transceiver unit (sometimes also referred to as a transceiver module). These units (modules) may perform a corresponding function in the method embodiment in the first aspect. For details, refer to descriptions in the method embodiment. Details are not described herein again.

According to a fourth aspect, an embodiment of this application provides a communication apparatus. The communication apparatus has a function of implementing behavior in the method embodiment of the second aspect. For beneficial effects, refer to the descriptions of the second aspect. Details are not described herein again. The communication apparatus may be the network device in the second aspect, or the communication apparatus may be an apparatus, for example, a chip or a chip system, that can support the network device in the second aspect in implementing a function required by the method provided in the second aspect.

In a possible design, the communication apparatus includes a corresponding means or module for performing the method in the second aspect. For example, the communication apparatus includes a processing unit (sometimes also referred to as a processing module) and/or a transceiver unit (sometimes also referred to as a transceiver module). These units (modules) may perform a corresponding function in the method embodiment in the second aspect. For details, refer to descriptions in the method embodiment. Details are not described herein again.

According to a fifth aspect, an embodiment of this application provides a communication apparatus. The communication apparatus may be the communication apparatus in the third aspect or the fourth aspect in the foregoing embodiments, or a chip or a chip system disposed in the communication apparatus in the third aspect or the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the terminal device or the network device in the foregoing method embodiments.

According to a sixth aspect, an embodiment of this application provides a communication apparatus. The communication apparatus includes at least one processor, and optionally, further includes a memory. The at least one processor is coupled to the memory. The at least one processor is configured to perform the method according to the first aspect or the second aspect.

According to a seventh aspect, an embodiment of this application provides a chip system. The chip system includes a processor, and may further include a memory and/or a communication interface, and is configured to implement the method according to the first aspect or the second aspect. In a possible implementation, the chip system further includes a memory, configured to store program instructions and/or data. The chip system may include a chip, or may include a chip and another discrete device.

According to an eighth aspect, an embodiment of this application provides a communication system. The communication system includes a communication apparatus configured to perform the method according to the first aspect and a communication apparatus configured to perform the method according to the second aspect. The communication apparatus configured to perform the method according to the first aspect is, for example, the terminal device according to the first aspect, and the communication apparatus configured to perform the method according to the second aspect is, for example, the network device according to the second aspect. Optionally, the communication system may further include a location management device.

According to a ninth aspect, this application provides a computer-readable storage medium. The computer-readable storage medium stores a computer program. When the computer program is run, the method according to either of the first aspect and the second aspect is implemented.

According to a tenth aspect, a computer program product is provided. The computer program product includes computer program code. When the computer program code is run, the method according to either of the first aspect and the second aspect is performed.

### BRIEF DESCRIPTION OF DRAWINGS

FIG. 1 is a diagram of an architecture of a system for a method according to an embodiment of this application;
FIG. 2a is a diagram of an architecture of a radio access network according to this application;
FIG. 2b is a diagram of an architecture of another radio access network according to this application;
FIG. 2c is a diagram of an architecture of another radio access network according to this application;
FIG. 2d is a diagram of an architecture of another radio access network according to this application;
FIG. 3 is a diagram of a software and hardware architecture of an access network according to this application;
FIG. 4 is a schematic flowchart of a communication method according to this application;
FIG. 5 is a diagram of a structure of a communication apparatus according to this application; and
FIG. 6 is a diagram of a structure of another communication apparatus according to this application.

### DESCRIPTION OF EMBODIMENTS

The following describes technical solutions of embodiments of this application with reference to accompanying drawings.

The technical solutions in embodiments of this application may be applied to various communication systems, for example, a long term evolution (long term evolution, LTE) system, a frequency division duplex (frequency division duplex, FDD), a time division duplex (time division duplex, TDD) system, a worldwide interoperability for microwave access (worldwide interoperability for microwave access, WiMAX) communication system, a 5th generation (5th generation, 5G) system, a new radio (new radio, NR), a 6th generation (6th generation, 6G) system, or a future communication system. The 5G mobile communication system in this application includes a non-standalone (non-standalone, NSA) 5G mobile communication system or a standalone (standalone, SA) 5G mobile communication system. Alternatively, the communication system may be a public land mobile network (public land mobile network, PLMN), a device-to-device (device-to-device, D2D) communication system, a machine to machine (machine to machine, M2M) communication system, an Internet of things (Internet of things, IoT) communication system, a vehicle to everything (vehicle to everything, V2X) communication system, an uncrewed aerial vehicle (uncrewed aerial vehicle, UAV) communication system, or another communication system.

In the descriptions of this application, unless otherwise specified, "/" indicates that associated objects are in an "or" relationship. For example, A/B may indicate A or B. "And/or" in this application describes only an association relationship between associated objects and indicates that three relationships may exist. For example, A and/or B may indicate the following three cases: Only A exists, both A and B exist, and only B exists. A and B may be singular or plural. In addition, in the descriptions of this application, unless otherwise specified, "a plurality of" means two or more. "At least one item (piece) of the following" or a similar expression thereof means any combination of these items, including a singular item (piece) or any combination of plural items (pieces). For example, at least one item (piece) of a, b, and c may indicate a, b, c, a-b, a-c, b-c, or a-b-c, where a, b, and c may be single or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to indicate giving an example, an illustration, or a description. Any embodiment or technical solution described by using "example" or "for example" in embodiments of this application should not be explained as being more preferred or having more advantages than another embodiment or design solution. Exactly, use of the terms such as "example" or "for example" is intended to present a related concept in a specific manner for ease of understanding.

In addition, the network architecture and the service scenario described in embodiments of this application are intended to describe technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

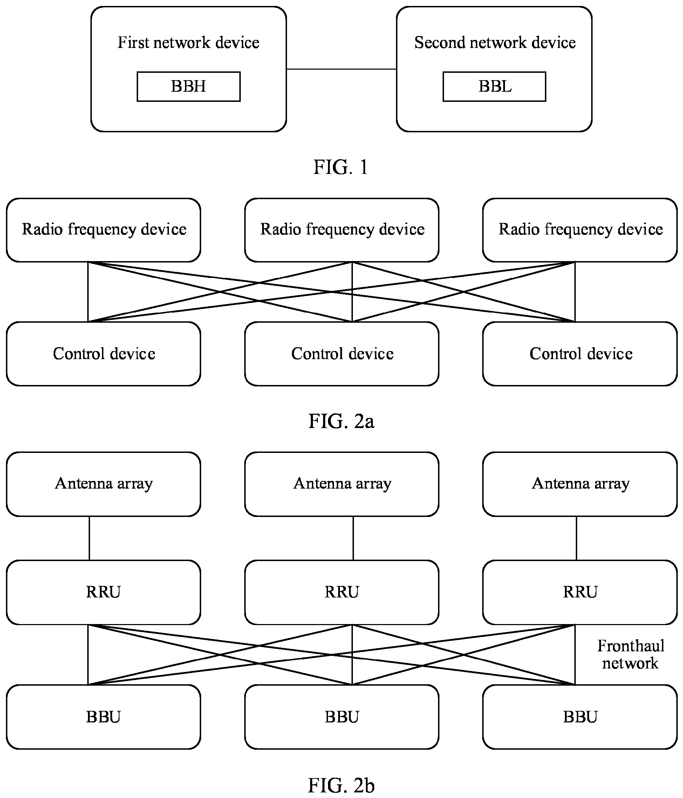

For ease of understanding of embodiments of this application, an application scenario of embodiments of this application is first described in detail with reference to FIG. 1.

FIG. 1 shows an architecture of a system applicable to a method according to an embodiment of this application. As shown in FIG. 1, the system includes a first network device and a second network device. The first network device and the second network device are connected through a first interface. The first interface may be any one of the following interfaces: a common public radio interface (common public radio interface, CPRI), an enhanced CPRI (enhanced CPRI, eCPRI) interface, an F1 interface, or a future-defined interface used to connect two network devices. An eCPRI protocol layer carries eCPRI services (eCPRI services), and the eCPRI services include user data (user data), real-time control (real-time control), and other eCPRI services (other eCPRI services). The eCPRI services may be carried at a transmission control protocol/internet protocol (transmission control protocol/internet protocol, TCP/IP) layer, or may be directly encapsulated at an ethernet media access control (media access control, MAC) layer instead of a TCP/IP layer. For example, the first interface may be referred to as a fronthaul (fronthaul) interface or a midhaul interface.

For example, the first network device is a control device, and the second network device is a radio frequency device. In a multi-cell coordination scenario, the first network device may send first information and second information to the second network device through the first interface. The first information indicates pilots corresponding to a plurality of terminal devices in a user group. The second information indicates a control device associated with a user group, or an association relationship between a user group and a control device. Correspondingly, after receiving the first information from the first network device, the second network device may send the pilots to the corresponding terminal devices. After receiving the second information from the first network device, the second network device may send, after receiving an uplink signal of a terminal device, the uplink signal corresponding to the terminal device to the control device associated with the terminal device.

The control device may be used as a main device of a base station, and provides a function of processing a baseband signal, for example, provides a baseband high (baseband high, BBH) function, and/or provides control and management of functions of devices of the base station. For example, in a downlink direction, the BBH may have one or more functions of coding (coding), rate matching (rate matching), scrambling (scrambling), modulation (modulation), and layer mapping (layer mapping). In an uplink direction, the BBH may have one or more functions of decoding (coding), rate de-matching (rate de-matching), de-scrambling (de-scrambling), de-modulation (de-modulation), and channel estimation (channel estimation)/equalization (equalization). In another implementation, the control device may be a baseband unit (baseband unit, BU or BBU), a central unit (central unit, CU), or the like, or the control device may be a device including a BBU or a CU.

In some deployments, the control device may include a CU. Further, the CU may use an architecture in which a control plane (control plane, CP) and a user plane (user plane, UP) are separated. In other words, the CU may include a CU-CP entity and a CU-UP entity.

The radio frequency device may be used as a radio frequency module of the base station, and may be configured to process an intermediate frequency signal and/or a radio frequency signal, or may be configured to receive and transmit a radio signal. The radio frequency device may be further configured to provide a processing function of some baseband signals, for example, provide a baseband low (baseband low, BBL) function. In some deployments, the radio frequency device may further include a distributed unit (distributed unit, DU). It may be understood that the DU includes some baseband processing functions. In this application, the DU is deployed at a location close to an antenna array. Therefore, the DU is used as a functional module in the radio frequency device. For example, in a downlink direction, the BBL may have one or more functions of resource mapping (resource element mapping), digital beamforming (digital beamforming, DBF), inverse fast Fourier transform (inverse fast Fourier transform, IFFT), cyclic prefix addition (cyclic prefix addition), analog beamforming (analog beamforming, ABF), and analog-to-digital conversion (analog-to-digital). In an uplink direction, the BBL may have one or more functions of fast Fourier transform (fast Fourier transform, FFT), cyclic prefix removal (cyclic prefix removal), and resource de-mapping (resource element de-mapping). For example, the radio frequency device may be a device including a radio unit (radio unit, RU), a remote radio unit (remote radio unit, RRU), an active antenna unit (active antenna unit, AAU), a DU, or the like, or the radio frequency device is an RU, an RRU, an AAU, a DU, or the like.

The control device may include a processing module, mainly configured to perform processing on received data by using an L3 protocol function, an L2 protocol function, and a baseband high BBH function at a layer L1, where the BBH function may be a part of the L1 protocol function. For example, the BBH function includes but is not limited to one or more of coding, layer mapping, precoding, antenna mapping, resource element RE mapping, and inverse fast Fourier transform. For another example, the BBH function includes but is not limited to one or more of resource element RE de-mapping, beam mapping, multiple-input multiple-output (multiple-input multiple-output, MIMO) equalization, and decoding.

In some deployments, when the radio frequency device includes a BBL function, and the control device includes a BBH function, the radio frequency device may be configured to perform processing on data by using a baseband low BBL function at a layer L1, where the BBL function includes at least discrete Fourier transform and/or inverse discrete Fourier transform. For example, when the BBL function in the radio frequency device includes at least discrete Fourier transform, the BBH function in the control device does not include discrete Fourier transform; or when the BBL function in the radio frequency device includes at least inverse discrete Fourier transform, the BBH function in the control device does not include inverse discrete Fourier transform; or when the BBL function in the radio frequency device includes at least discrete Fourier transform and inverse discrete Fourier transform, the BBH function in the control device does not include discrete Fourier transform and inverse discrete Fourier transform.

In a case of 4G/5G, bandwidth can be greatly compressed after discrete Fourier transform or inverse discrete Fourier transform. If uplink data is received, time domain data is converted into frequency domain data after discrete Fourier transform or inverse discrete Fourier transform. Frequency domain is usually allocated based on a user (a terminal). When there are a small quantity of terminals, most of the frequency domain is idle, and this part of idle frequency domain data may not be transmitted. In this way, a small amount of data can be transmitted between the radio frequency device and the control device.

In an example, the L1 protocol function includes coding, modulation, layer mapping, precoding, antenna mapping, resource element RE mapping, and inverse fast Fourier transform. If the BBH function includes coding, layer mapping, and precoding, the BBL function includes a function other than the BBH function in the L1 protocol function. In other words, the BBL function includes modulation, antenna mapping, resource element RE mapping, inverse fast Fourier transform, and the like.

The following explains related data in this application.

### 1. (Radio) access network (radio access network, (R)AN) device

The (R)AN may also be referred to as an access device. The (R)AN can manage a radio resource, provide an access service for user equipment, and complete forwarding of user equipment data between the user equipment and a core network. The (R)AN may also be understood as a base station in a network.

For example, the access network device in embodiments of this application may be any communication device that has a wireless transceiver function and that is configured to communicate with the user equipment. The access network device includes, for example, but is not limited to, an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a transmission and reception point (transmission and reception point, TRP); or may be a next generation NodeB (next generation NodeB, gNB) or a transmission point (TRP or TP) in a 5G system, for example, an NR system, or one antenna panel or a group of antenna panels (including a plurality of antenna panels) of a base station in the 5G system; or may be a network node, like a baseband unit (BBU) or a DU, that forms a gNB or a transmission point. In a positioning architecture based on a 5G core network, a gNB/ng-eNB may provide measurement information for target user equipment, and convey the information to a location management device.

The RAN device may alternatively be a module or a unit that completes some functions of a base station, for example, may be a central unit CU, may be a distributed unit (distributed unit, DU), or may be a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete functions of some physical layers or all physical layers. For specific descriptions of the foregoing protocol layers, refer to technical specifications related to the 3rd generation partnership project (3rd generation partnership project, 3GPP). The CU and the DU may be separately disposed, or may be included in the same network element, for example, a baseband unit (baseband unit, BBU). The RU may be included in a radio frequency device or a radio unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings of the names. For example, in an ORAN system, the CU may also be referred to as an O-CU (open-CU), the DU may also be referred to as an O-DU, and the RU may also be referred to as an O-RU. Any one of the CU (or the CU-CP or the CU-UP), the DU, and the RU in this application may be implemented via a software module, a hardware module, or a combination of a software module and a hardware module.

### 2. Terminal device

The terminal device may also be referred to as a terminal, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in embodiments of this application.

### 3. Radio unit (radio unit, RU)

The RU may implement functions such as intermediate frequency processing, radio frequency processing, and duplexing of a signal. For example, the RU may be a remote radio unit (remote radio unit, RRU), an active antenna unit (active antenna unit, AAU), or another network element or communication apparatus that has a capability of processing an intermediate frequency signal, a radio frequency signal, or an intermediate radio frequency signal. In a communication system using an enhanced common public radio interface (enhanced common public radio interface, eCPRI), the RU may include baseband low (baseband low, BBL).

### 4. Baseband unit (baseband unit, BU)

The BU may implement a baseband signal processing function. For example, the BU may be a baseband unit (baseband unit, BBU), a central unit (central unit, CU), a distributed unit (distributed unit, DU), or another network element or communication apparatus that has a capability of processing a baseband signal. The BU may include baseband high (baseband high, BBH).

### 5. Pilot (pilot)

The pilot may also be referred to as pilot information, a pilot signal, an RS, a reference sequence, or the like. The pilot may be used for channel measurement. The pilot may include an uplink pilot and a downlink pilot. The uplink pilot is used for uplink channel measurement, and uplink CSI (or uplink channel matrix) estimation. The uplink pilot is a pilot sent by a terminal device. A network device estimates the uplink CSI based on the pilot, and then transposes the uplink CSI as the downlink CSI based on reciprocity between uplink and downlink channels. The downlink pilot is used for downlink channel measurement, and downlink CSI (or downlink channel matrix) estimation. For example, the uplink pilot may be a sounding reference signal (sounding reference signal, SRS), and the downlink pilot may be a channel state information reference signal (channel state information reference signal, CSI-RS). It should be understood that the foregoing enumerated reference signals are merely examples, and should not constitute any limitation on this application. This application does not exclude a possibility of defining another reference signal in a future protocol to implement the same or similar function.

Uplink coordination multi-point (Uplink Coordination Multi-Point, UL CoMP) means that antennas of adjacent cells are used to jointly receive a signal sent by a user, to obtain multi-antenna signal combining gains or interference suppression gains. UL CoMP mainly refers to a joint reception (Joint Reception, JR) technology. To be specific, signals from different cells or base stations are jointly processed at a baseband, and the signals are enhanced and interference is suppressed through larger-scale multi-antenna processing. The UL CoMP includes soft combination (Soft Combination, SC), joint detection (Joint Detection, JD), joint interference rejection combining (Joint Interference Rejection Combine, JIRC), coordination multi-point interference cancellation (Coordination Multi-Point Interference Cancellation, CoMP IC), and the like.

The JD means that all antennas of a coordinated reception node are considered as virtual multi-antennas, and a plurality of users who belong to different cells and who are on the same time-frequency resource are considered as multi-user multiple-input multiple-output (multi-user multiple-input multiple-output, MU MIMO) users. In this way, uplink multi-user joint detection is performed, to better obtain signal combining gains and interference suppression gains. Transmitted information includes scheduling information and antenna frequency domain data, and has a high requirement on real-time performance. Scalability is low, and complexity increases cubicly with a quantity of coordination users and increases cubicly with a quantity of coordination nodes. Specifications are restricted by a maximum quantity of joint reception antennas and a maximum quantity of coordination users.

The JIRC means that all antennas of the coordinated reception node are regarded as virtual multi-antennas, and joint equalization reception is performed on signals of target users in a serving cell, to obtain combining gains and interference suppression gains. Similar to the JD, transmitted information includes scheduling information and antenna frequency domain data, and has high a requirement on real-time performance. Scalability is medium, and complexity increases linearly with a quantity of coordination users and increases cubicly with a quantity of coordination nodes. Specifications are restricted by a maximum quantity of joint reception antennas.

Due to a limitation of an existing rule of allocating different pilot root sequences between cells, accuracy of channel estimation from strongly interfering UE to a serving cell is affected by pilot contamination, thereby reducing gains of the JD and the JIRC.

Interaction between cooperating cells is implemented by interaction of processing cores. As quantities of coordination users and coordination nodes increases, latency increases, and JD and JIRC performance deteriorates.

In view of this, this application provides the following embodiments. FIG. 2a is a diagram of an architecture of a radio access network according to this application. The radio access network in FIG. 2a includes a plurality of control devices and a plurality of radio frequency devices. Each of the plurality of radio frequency devices is connected to the plurality of control devices. The radio frequency device is configured to connect to at least one terminal device through an air interface.

In this embodiment, one of the plurality of control devices (referred to as a target control device for short below) is configured to control the radio frequency device to measure a channel of the terminal device, to obtain channel measurement information of the terminal device. The target control device is further configured to group terminal devices from a plurality of cells based on the channel measurement information, to obtain a plurality of user groups. In the plurality of user groups, terminal devices in a user group are from at least two cells. Terminal devices in the same user group include terminal devices that are determined based on the channel measurement information and have high channel correlation or high mutual interference. In addition, a user group and a control device are associated. One user group may be associated with one control device, and one control device may be associated with at least one user group. The control device processes the uplink signal of the terminal device in the associated user group. The target control device may further allocate orthogonal pilots to terminal devices in each user group, thereby mitigating pilot contamination among terminal devices in the same user group. The control device may further send a grouping result of terminal devices (information about a plurality of user groups), a pilot allocation result, and a result of association between a user group and a control device to a plurality of radio frequency devices, so that the radio frequency device may send a pilot to a corresponding terminal device, and when receiving an uplink signal from the terminal device, send the uplink signal to the control device associated with the terminal device, or send, to the control device associated with the terminal device, a processed uplink signal after specific processing is performed on the uplink signal. The target control device may further send the grouping result of the terminal devices to another control device, so that the control device may perform joint processing on uplink signals of the terminal devices in the user group.

In this embodiment, the control device may include a BBU, a BBH, a CU, or the like. The radio frequency device may include an RRU, a BBL, a TRP, an AAU, or the like. In different architectures, the control device and the radio frequency device include different components.

For example, as shown in FIG. 2b, the control device may include a BBU, and the radio frequency device may include an RRU and an antenna array. The RRU may be connected to a plurality of BBUs through a fronthaul network. For example, the RRU is deployed at a location close to the antenna array, and BBUs of a plurality of control devices may be deployed in the same equipment room or in different equipment rooms. The RRU may send the uplink signal of the terminal device to a corresponding BBU based on the user group to which the terminal device belongs and the control device associated with the user group. Therefore, latency of negotiation and interaction between the BBUs can be reduced.

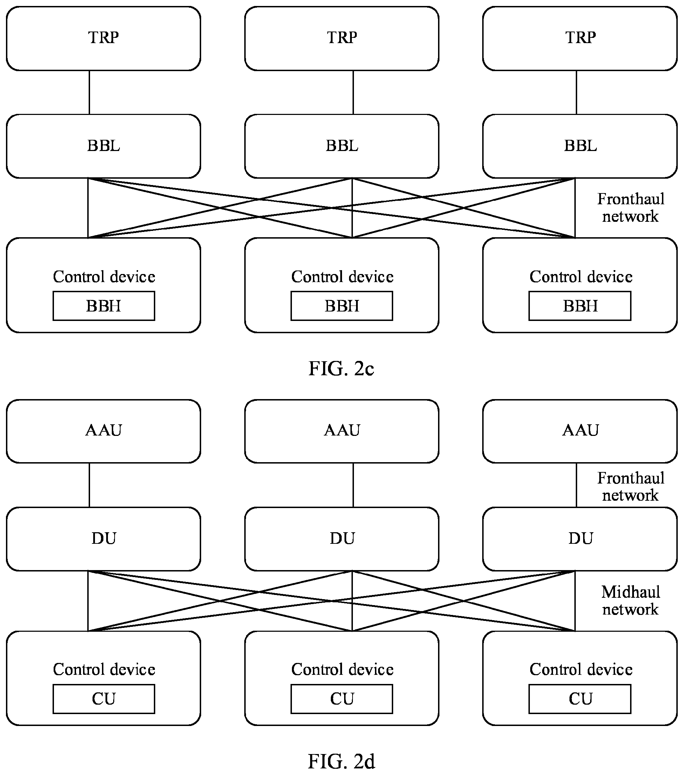

For another example, as shown in FIG. 2c, the control device may include a BBH, and the radio frequency device may include a BBL and a TRP. The BBL may be connected to a plurality of BBHs through a fronthaul network. For example, the BBL is deployed at a location close to the TRP, and BBHs of a plurality of control devices may be deployed in the same equipment room or different equipment rooms. The BBL may process an uplink signal of a terminal device in a cell, and then send, based on a user group to which the terminal device belongs and a control device associated with the user group, a processed uplink signal to a BBH corresponding to the terminal device. Therefore, latency of negotiation and interaction between the BBHs can be reduced.

For another example, as shown in FIG. 2d, the control device may include a CU, and the radio frequency device may include a DU and an AAU. The DU may be connected to the AAU through a fronthaul network. For example, the DU is deployed at a location close to the AAU, and the DU may be connected to a plurality of CUs through a midhaul network. CUs of a plurality of control devices may be deployed in the same equipment room or different equipment rooms. The DU may process an uplink signal of a terminal device in a cell, and then send, based on a user group to which the terminal device belongs and a control device associated with the user group, the uplink signal of the terminal device to a corresponding CU. Therefore, latency of negotiation and interaction between the CUs can be reduced.

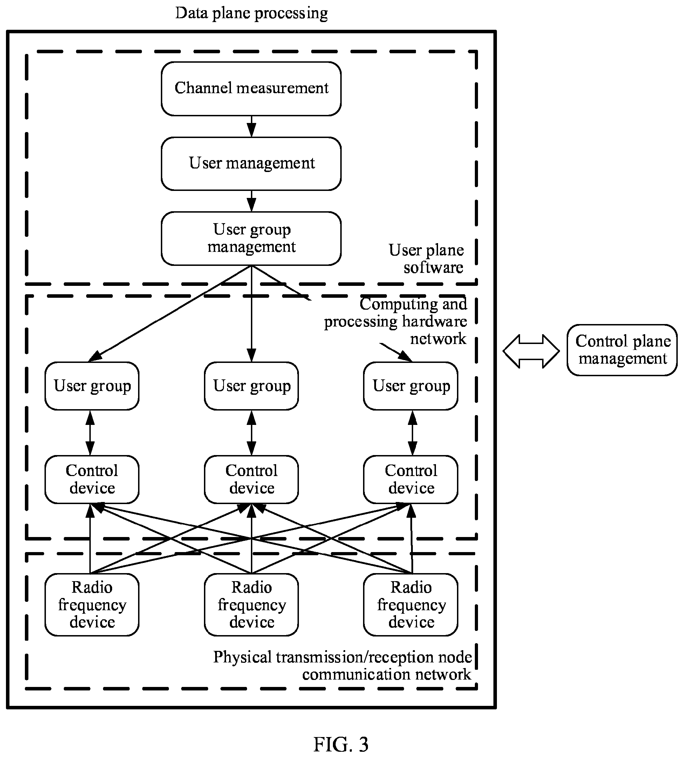

FIG. 3 is a diagram of a software and hardware architecture of an access network according to this application. The software and hardware architecture shown in FIG. 3 includes user plane software, a computing and processing hardware network, a physical transmission/reception node communication network, and control plane management.

The user plane software includes a channel measurement module, a user management module, a user group management module, and the like. Channel measurement is for obtaining a channel measurement result of a terminal device. User management is for grouping terminal devices in a plurality of cells based on the channel measurement result, to obtain a plurality of user groups. For example, terminal devices with high channel correlation to each other from the same cell or different cells are grouped into the same user group, or a terminal device in a neighboring cell with high interference power to a target cell and at least one terminal device in the target cell are grouped into the same user group. The user group may include terminal devices from different cells. User group management is for allocating a root sequence to each user group, and allocating orthogonal pilots to terminal devices in the user group based on the root sequence of the user group. Root sequences of different user groups may be the same or different, or root sequences of some user groups may be the same, and root sequences of some user groups are different. The user group management may be further for associating each user group with one control device, so that combination processing is performed by the associated control device on uplink signals of terminal devices in the user group.

The computing and processing hardware network includes a plurality of control devices, one user group is associated with one control device, and each control device is configured to process an uplink signal corresponding to a terminal device in the associated user group. It should be noted that, in the figure, an example in which one user group is associated with one control device is used. When a quantity of user groups is greater than a quantity of control devices, at least two user groups may be associated with one control device. This is not limited herein.

The physical transmission/reception node communication network includes a plurality of radio frequency devices. Radio frequency devices of a serving cell and a cooperating cell receive an uplink signal of a terminal device, and send the uplink signal corresponding to the terminal device to the control device associated with the terminal device.

Control plane management is for assisting in managing a control signal and control signaling that are related to a terminal device. For example, the control plane management is for delivering a corresponding pilot to the terminal device.

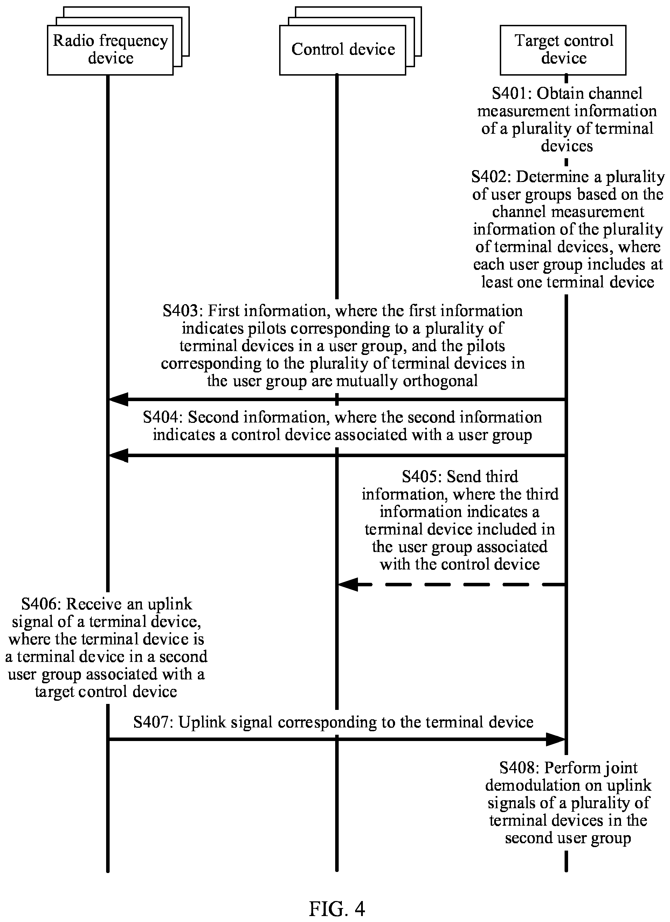

FIG. 4 is a schematic flowchart of a communication method according to an embodiment of this application. The method may be implemented by a radio access network in any one of the architectures in FIG. 2a to FIG. 2d. This embodiment includes the following steps.

S401: A target control device obtains channel measurement information of a plurality of terminal devices.

The channel measurement information includes, for example, at least one of reference signal received power RSRP, SRS measurement information, PRS (including UL-PRS or DL-PRS) measurement information, and CSI-RS measurement information. The channel measurement information may further include status information, such as a service volume and quality of service (quality of service, QoS), that corresponds to the terminal device.

The channel measurement information, for example, RSRP, DL-PRS, or CRI-RS measurement information, may be obtained by the terminal device by measuring a downlink reference signal and then reported to a device in the radio access network. In a possible implementation, the terminal device may periodically report the channel measurement information, and the target control device obtains the channel measurement information periodically reported by the plurality of terminal devices. In another possible implementation, the control device may alternatively send a measurement reference signal to the terminal device through the radio frequency device, and the terminal device reports the channel measurement information based on an indication of the measurement reference signal. Channel measurement information of an uplink channel may be obtained based on channel reciprocity and channel measurement information of a downlink channel.

The channel measurement information, for example, the SRS measurement information or the UL-PRS, may alternatively be obtained by a device in the radio access network by measuring an uplink signal of the terminal device. In a possible implementation, the SRS may be periodically sent by the terminal device. A device in the access network receives the SRS periodically sent by the terminal device, to measure the SRS, to obtain the SRS measurement information. In another possible implementation, for a semi-persistent or an aperiodic SRS, it may alternatively be that the target control device sends measurement control information to the terminal device, and the terminal device sends the SRS or the UL-PRS based on an indication of the measurement control information.

In this embodiment, the plurality of terminal devices include terminal devices from a plurality of cells. The channel measurement information of the terminal device may include channel measurement information corresponding to the terminal device in a serving cell, and may further include channel measurement information corresponding to the terminal device in a neighboring cell.

S402: The target control device determines a plurality of user groups based on the channel measurement information of the plurality of terminal devices, where each user group includes at least one terminal device.

In this embodiment, because the plurality of terminal devices include the terminal devices from the plurality of cells, in the plurality of user groups, a plurality of terminal devices in a user group are from different cells. In other words, a user group in this embodiment may include terminal devices that belong to different serving cells. One terminal device belongs to only one user group.

The target control device may determine channel correlation between the plurality of terminal devices or interference power magnitude between terminal devices based on the channel measurement information, and determine terminal devices in the plurality of user groups based on the channel correlation or the interference power magnitude. In other words, terminal devices to be grouped into the same user group are determined based on the channel correlation or the interference power magnitude between the terminal devices, so that terminal devices with high channel correlation or high mutual interference are grouped into the same user group. Larger interference power indicates stronger interference between two terminal devices, and smaller interference power indicates weaker interference between two terminal devices.

The target control device may group the plurality of terminal devices by using a user grouping algorithm. The user grouping algorithm may be, for example, a graph theory-based algorithm, a mixed integer programming (mixed integer programming) algorithm, or a heuristic algorithm. A global or local optimal grouping result of terminal devices may be determined by using the graph theory-based algorithm, the mixed integer programming algorithm, and the heuristic algorithm. The graph theory-based algorithm may include, for example, a graph theory-based clustering algorithm. For example, each terminal device may be used as a vertex, and terminal devices with channel correlation or mutual interference are connected via an edge, and a value of the channel correlation or interference power magnitude between two terminal devices having an edge therebetween is used as an edge weight to obtain a graph that can describe the channel correlation or interference power magnitude between terminal devices. Then, the graph is segmented into several subgraphs, where weights (similarity) of edges connecting different subgraphs are as low as possible, and weights (similarity) of edges within the same subgraph are as high as possible. There are a plurality of methods for segmenting a graph, for example, cut/ratio cut, normalized cut, or conversion to a singular value decomposition (singular value decomposition, SVD) problem for solving. The heuristic algorithm includes, for example, a simulated annealing algorithm, a genetic algorithm, a list search algorithm, evolutionary programming, an evolutionary strategy, an ant colony algorithm, and an artificial neural network.

Alternatively, the target control device may determine locations of the plurality of terminal devices based on the channel measurement information, and then perform grouping into user groups based on the locations of the terminal devices. For example, positioning (the locations) of the terminal devices may be obtained based on the PRS measurement information. Then, a distance between the terminal devices is determined based on the positioning of the terminal devices. Finally, terminal devices that are close to each other are grouped into the same user group. The target control device may group, according to a clustering algorithm, a plurality of terminal devices that are spatially aggregated into the same user group.

Optionally, a quantity of user groups is the same as a maximum quantity of allocatable root sequences.

It should be noted that user grouping may be updated with factors such as movement of a terminal device and a change of interference between terminal devices. For example, when the channel measurement information of the terminal device changes, grouping calculation is performed again based on changed channel measurement information, to obtain an updated user group.

S403: The target control device sends first information to the radio frequency device. Correspondingly, the radio frequency device receives the first information. The first information indicates pilots corresponding to a plurality of terminal devices in a user group, and the pilots corresponding to the plurality of terminal devices in the user group are mutually orthogonal.

The target control device may separately send the first information to a plurality of radio frequency devices. The target control device may indicate, to the radio frequency device, a grouping result of the plurality of terminal devices and a user group to which the terminal device belongs, so that when subsequently receiving an uplink signal from the terminal device, the radio frequency device may determine a control device to which the uplink signal of the terminal device is to be sent for processing. In addition, the target control device may indicate, to the radio frequency device, the pilot allocated to the terminal device, so that the radio frequency device may send fourth information of the terminal device to a terminal device in a serving cell, where the fourth information indicates the pilot allocated to the terminal device. In this way, the terminal device sends an uplink signal by using the corresponding pilot. The pilot allocated by the target control device to the terminal device herein is a pilot used for channel estimation and uplink demodulation, for example, a DMRS.

The first information may include pilot configuration information of terminal devices in a plurality of user groups. The plurality of user groups includes a first user group, and a plurality of terminal devices in the first user group include terminal devices in at least two cells. It should be noted that, the first user group including terminal devices in the at least two cells means including at least one terminal device in the at least two cells. To be specific, the first user group may include all terminal devices in the at least two cells, or may include some terminal devices in the at least two cells. This is determined based on an actual grouping status, and is not limited herein.

The target control device may allocate one root sequence to each user group. Terminal devices in one user group have the same root sequence. The target control device implements, based on the root sequence, pilot orthogonality between terminal devices in the same user group by using time division, frequency division, and code division. Therefore, pilot contamination among terminal devices that originally have mutual interference can be mitigated or eliminated, and coordination gains can be improved. In addition, because the terminal devices in the same user group may be from different cells, and the target control device allocates pilots to the terminal devices in the plurality of user groups, pilot orthogonality between the plurality of terminal devices in the same user group can be ensured without negotiation and interaction between control devices. This can reduce negotiation latency between the control devices.

Different root sequences may be allocated to different user groups. Certainly, the same root sequence may be allocated to some user groups, and different root sequences may be allocated to some user groups. Pilots between terminal devices in a user group to which the same root sequence is allocated are mutually orthogonal. This is not limited herein.

S404: The target control device sends second information to the radio frequency device. Correspondingly, the radio frequency device receives the second information. The second information indicates a control device associated with a user group.

The target control device may separately send the second information to the plurality of radio frequency devices, so that when subsequently receiving an uplink signal from the terminal device, the radio frequency device may determine, based on a user group to which the terminal device belongs and an association relationship between the user group and the control device, to send the uplink signal of the terminal device to the control device associated with the terminal device for processing.

The second information may include information about a control device associated with a plurality of user groups. One control device may be associated with at least two user groups, and one user group is associated with only one control device. For example, when a quantity of user groups is greater than a quantity of control devices, one control device may be associated with at least two user groups. The foregoing first user group is included in the plurality of user groups. The first information and the second information may be the same or different. This is not limited herein.

S405: The target control device sends third information to another control device. Correspondingly, the another control device receives the third information. The third information indicates a terminal device included in a user group associated with the control device.

This step is an optional step, and is shown by a dashed line in FIG. 4.

In this embodiment, the control device demodulates an uplink signal of the associated user group on a per-user-group basis. When one control device is associated with a plurality of user groups, the control device needs to distinguish which terminal devices belong to the same user group, so that uplink signals of the plurality of terminal devices in the user group can be accurately demodulated on a per-user-group basis. It should be noted that the uplink signal processed by the control device in this embodiment may be an uplink signal that has been processed by the radio frequency device. For example, when the radio frequency device includes a BBL or a DU, the BBL/DU performs partial baseband processing on the uplink signal, and then sends a processed uplink signal to a corresponding control device.

In a possible implementation, the third information may include information about terminal devices in all user groups. In this case, the target control device may send the third information to all other control devices. Certainly, the target control device may alternatively send the third information to only some control devices, for example, send the third information to only a control device associated with at least two user groups. In another possible implementation, the third information may alternatively include information about terminal devices in at least two user groups associated with the same control device. In this case, the target control device may send the third information to the control device associated with the at least two user groups. In still another possible implementation, the third information includes information about a terminal device in a user group associated with one control device, and the target control device sends corresponding third information to other control devices respectively. In other words, the third information sent to the control device indicates a terminal device in a user group associated with the control device.

S406: The radio frequency device receives the uplink signal of the terminal device. The terminal device is a terminal device in a second user group associated with the target control device.

The radio frequency device may receive an uplink signal of a terminal device in a serving cell, or may receive an uplink signal of a terminal device in a cooperating cell. The radio frequency device that receives the uplink signal of the terminal device includes a radio frequency device in the serving cell, and also includes a radio frequency device in the cooperating cell. Herein, an example in which the terminal device is the terminal device in the second user group associated with the target control device is used.

S407: The radio frequency device sends the uplink signal corresponding to the terminal device to the control device associated with the terminal device.

After receiving the uplink signal of the terminal device, the radio frequency device performs corresponding processing on the uplink signal, for example, performs filtering, low-noise amplification, down-conversion, and other processing, to obtain a processed uplink signal. When the radio frequency device includes the BBL or the DU, the radio frequency device may further perform corresponding baseband processing on the uplink signal. For example, the BBL may perform first-level equalization/beam dimension reduction processing, for example, one or more of cyclic prefix removal, FFT, and resource de-mapping, on a first uplink signal (a signal that is received by the BBL and that has been processed by the TRP), to obtain a second uplink signal, and then send the second uplink signal to a corresponding control device.

The radio frequency device determines the control device associated with the terminal device, and sends the processed uplink signal to the corresponding control device. In other words, regardless of whether the terminal device is the terminal device in the serving cell of the radio frequency device, the radio frequency device sends the uplink signal corresponding to the terminal device to the control device associated with the terminal device. Therefore, the control device can obtain uplink signals from different radio frequency devices related to the terminal device associated with the control device, and interaction between the control devices is not required, which can reduce latency of demodulating the uplink signals by the control device.

In FIG. 4, an example in which the terminal device is the terminal device in the second user group associated with the target control device is used. To be specific, each radio frequency device sends an uplink signal (an uplink signal that has been processed by the radio frequency device) corresponding to the terminal device to the target control device.

S408: The target control device performs joint demodulation on uplink signals of a plurality of terminal devices in the second user group.

The target control device performs joint demodulation on the uplink signals of the plurality of terminal devices in the second user group. Because pilots of terminal devices in the same user group are mutually orthogonal, pilot contamination among the terminal devices in the user group is mitigated, and accuracy of uplink channel estimation can be improved, thereby improving performance of demodulating an uplink signal.

In this embodiment, terminal devices in a plurality of cells are grouped based on channel measurement information, to obtain a plurality of user groups. Then, pilot allocation is performed based on the user groups, so that pilots of the terminal devices in the user groups are mutually orthogonal. This mitigates pilot contamination among the terminal devices in the user groups, and enables uplink channel estimation to be more accurate, thereby improving demodulation performance of uplink signals, and improving coordination gains. Further, one user group is associated with one control device, and one control device performs, on a per-user-group basis, joint demodulation on uplink signals of terminal devices in an associated user group without interaction between control devices. Therefore, latency can be reduced, and demodulation efficiency can be improved.

In related descriptions of FIG. 4, the target control device allocates pilots to terminal devices in all user groups. Optionally, in another implementation, each control device may alternatively allocate pilots of terminal devices in a user group associated with the control device, provided that pilots of terminal devices in the same user group are mutually orthogonal. Specifically, after the target control device determines the plurality of user groups, the control device associated with the user groups, and root sequences corresponding to the user groups, the target control device sends, to other control devices, corresponding user group information (information about terminal devices in user groups associated with the control devices, root sequences allocated to the associated user groups, and the like). Then, the control devices allocate, based on the root sequences, orthogonal pilots to the terminal devices in the user groups associated with the control devices. In this case, both the first user group and the second user group in FIG. 4 may be considered as user groups associated with the target control device. The first user group and the second user group may be the same user group or different user groups.

The following describes, with reference to the accompanying drawings, communication apparatuses for implementing the foregoing method in embodiments of this application.

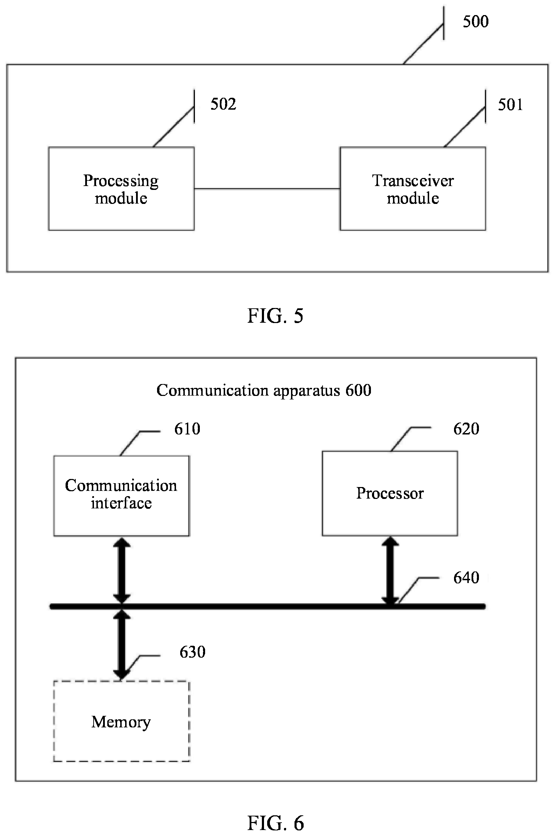

FIG. 5 is a possible example block diagram of a communication apparatus in this application. The communication apparatus 500 may correspondingly implement functions or steps implemented by the control device or the radio frequency device in the foregoing method embodiments. The communication apparatus may include a transceiver module 501 and a processing module 502. Optionally, a storage module may be further included. The storage module may be configured to store instructions (code or a program) and/or data. The processing module 502 may be coupled to the storage module. For example, the processing module 502 may read the instructions (the code or the program) and/or the data in the storage module, to implement the corresponding methods. The foregoing modules may be independently disposed, or may be partially or completely integrated.

It should be understood that the processing module 502 may be a processor or a controller, for example, may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module 502 may implement or execute various example logical blocks, modules, and circuits described with reference to content disclosed in this application. Alternatively, the processor may be a combination implementing a computing function, for example, a combination including one or more microprocessors, or a combination of the DSP and the microprocessor. The transceiver module 501 is an interface circuit of the apparatus, and is configured to receive a signal from another apparatus. For example, when the apparatus is implemented in a form of a chip, the transceiver module 501 is an interface circuit used by the chip to receive a signal from another chip or apparatus, or is an interface circuit used by the chip to send a signal to another chip or apparatus.

The communication apparatus 500 may be the control device or the radio frequency device in the foregoing embodiments, or may be a chip configured to implement a function of the control device or the radio frequency device in the foregoing embodiments. For example, when the communication apparatus 500 is the control device or the radio frequency device, the processing module 502 may be, for example, a processor, and the transceiver module 501 may be, for example, a transceiver. Optionally, the transceiver may include a radio frequency circuit, and the storage module may be, for example, a memory. For example, when the communication apparatus 500 is the chip configured to implement the function of the control device or the radio frequency device, the processing module 502 may be, for example, a processor, and the transceiver module 501 may be, for example, an input/output interface, a pin, or a circuit. The processing module 502 may execute computer-executable instructions stored in the storage unit. Optionally, the storage unit is a storage unit, for example, a register or a cache, in the chip. Alternatively, the storage unit may be a storage unit that is in the control device or the radio frequency device and that is located outside the chip, for example, a read-only memory (read-only memory, ROM), another type of static storage device that can store static information and instructions, or a random access memory (random access memory, RAM).

In some possible implementations, the communication apparatus 500 can correspondingly implement behavior and the function of the control device in the foregoing method embodiments. For example, the communication apparatus 500 may be a control device, or may be a component (for example, a chip or a circuit) used in the control device. The transceiver module 501 may be configured to support communication between the control device and another network entity, for example, support communication between the terminal device and the radio frequency device shown in FIG. 3. The processing module 502 is configured to control and manage an action of the control device. For example, the processing module 502 is configured to support the control device in performing all operations other than sending and receiving performed by the control device in FIG. 4.

For example, the transceiver module 501 may be configured to perform all receiving or sending operations performed by the control device in the embodiment shown in FIG. 4, for example, S403, S404, S405, and S405 in the embodiment shown in FIG. 3, and/or configured to support another process of the technology in this specification. The processing module 502 is configured to perform all operations other than the sending and receiving operations performed by the control device in the embodiment shown in FIG. 4, for example, configured to support another process of the technology described in this specification.

In some embodiments, the transceiver module 501 is configured to send first information, where the first information indicates pilots corresponding to a plurality of terminal devices in a first user group, the pilots corresponding to the plurality of terminal devices in the first user group are mutually orthogonal, and the plurality of terminal devices in the first user group include terminal devices in at least two cells.

In a possible implementation, the transceiver module 501 is further configured to send second information, where the second information indicates a control device associated with the first user group, and the control device is configured to process an uplink signal of a terminal device in the associated first user group.

In a possible implementation, the transceiver module 501 is further configured to send third information, where the first information indicates the terminal devices included in the first user group.

In a possible implementation, the transceiver module 501 is further configured to receive uplink signals of a plurality of terminal devices in an associated second user group. The processing module 502 is configured to perform joint demodulation on the uplink signals of the plurality of terminal devices in the second user group.

In a possible implementation, the processing module 502 is configured to obtain channel measurement information corresponding to terminal devices in a plurality of cells. The processing module 502 is configured to determine the plurality of terminal devices in the first user group based on the channel measurement information.

In some possible implementations, the communication apparatus 500 can correspondingly implement behavior and the function of the radio frequency device in the foregoing method embodiments. For example, the communication apparatus 500 may be a radio frequency device, or may be a component (for example, a chip or a circuit) used in a radio frequency device. The radio frequency device is, for example, an RRU, an AAU, or a TRP in an access network device. The transceiver module 501 may be configured to support communication between the radio frequency device and another network entity, for example, support communication between the radio frequency device and the control device shown in FIG. 4. The processing module 502 is configured to control and manage an action of the radio frequency device. For example, the processing module 502 is configured to support the radio frequency device in performing all operations other than receiving and sending in FIG. 4.

In some embodiments, the transceiver module 501 is configured to receive first information, where the first information indicates pilots corresponding to a plurality of terminal devices in a first user group, the pilots corresponding to the plurality of terminal devices in the first user group are mutually orthogonal, and the plurality of terminal devices in the first user group include terminal devices in at least two cells.

In a possible implementation, the transceiver module 501 is configured to receive second information, where the second information indicates a control device associated with the first user group, and the control device is configured to process an uplink signal of a terminal device in the associated first user group.

In a possible implementation, the transceiver module 501 is configured to receive a first uplink signal of a terminal device in the user group; and the transceiver module 501 is configured to send a second uplink signal to the control device associated with the terminal device, where the second uplink signal is obtained based on the first uplink signal.

In a possible implementation, the transceiver module 501 is configured to send fourth information, where the fourth information indicates a pilot corresponding to a terminal device in the user group.

It should be understood that, in embodiments of this application, the processing module 502 may be implemented by a processor or a processor-related circuit component, and the transceiver module 501 may be implemented by a transceiver or a transceiver-related circuit component.

FIG. 6 is a diagram of a structure of a communication apparatus according to this application. A communication apparatus 600 may be a control device or the like, and can implement a function of the control device in the method provided in embodiments of this application. Alternatively, a communication apparatus 600 may be a radio frequency device, and can implement a function of the radio frequency device in the method provided in embodiments of this application. Alternatively, a communication apparatus 600 may be an apparatus that can support a control device or a radio frequency device in implementing a corresponding function in the method provided in embodiments of this application. The communication apparatus 600 may be a chip system. In embodiments of this application, the chip system may include a chip, or may include a chip and another discrete device.

The communication apparatus 600 includes at least one processor 620. The processor 620 may be a CPU, a microprocessor, an ASIC, or one or more integrated circuits configured to control program execution in the solutions of this application, and is configured to implement or support the communication apparatus 600 in implementing a function of the control device or the radio frequency device in the method provided in embodiments of this application. For details, refer to descriptions in the method embodiments. Details are not described herein again.

The communication apparatus 600 may further include at least one memory 630, configured to store program instructions and/or data. The memory 630 is coupled to the processor 620. A coupling in embodiments of this application may be an indirect coupling or a communication connection between apparatuses, units, or modules in an electrical, mechanical, or other forms, and is used for information exchange between the apparatuses, the units, or the modules. The processor 620 may cooperate with the memory 630. The processor 620 may execute the program instructions and/or the data stored in the memory 630, so that the communication apparatus 600 implements a corresponding method. At least one of the at least one memory may be included in the processor 620.

The communication apparatus 600 may further include a communication interface 610, and is configured to communicate with another device or a communication network, for example, a radio frequency device, through any transceiver-type apparatus. The communication interface 610 is configured to communicate with another device through a transmission medium, so that an apparatus in the communication apparatus 600 may communicate with the another device. For example, when the communication apparatus 600 is a control device, the another device is a radio frequency device; or when the communication apparatus is a radio frequency device, the processor 620 may send and receive data through the communication interface 610. The communication interface 610 may be specifically a transceiver.

A specific connection medium among the communication interface 610, the processor 620, and the memory 630 is not limited in embodiments of this application. In embodiments of this application, the memory 630, the processor 620, and the communication interface 610 are connected through a bus 640 in FIG. 6. The bus is represented by a bold line in FIG. 6. A manner of a connection between other components is merely an example for description, and imposes no limitation. The bus may be classified into an address bus, a data bus, a control bus, and the like. For ease of representation, only one bold line is used for representation in FIG. 6. However, this does not mean that there is only one bus or only one type of bus.

In embodiments of this application, the processor 620 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

The memory 630 may be a ROM or another type of static storage device that can store static information and instructions, a RAM, or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a blue optical disc, and the like), a magnetic disk storage medium or another magnetic storage device, or any other medium that can carry or store expected program code in a form of an instruction structure or a data structure and can be accessed by a computer, but is not limited thereto. The memory may independently exist and may be connected to the processor through a communication line. The memory may alternatively be integrated with the processor.

The memory 630 is configured to store computer-executable instructions for performing the solutions in this application, and the processor 620 controls execution. The processor 620 is configured to execute the computer-executable instructions stored in the memory 630, to implement the communication method provided in the foregoing embodiment of this application.

Optionally, the computer-executable instructions in embodiments of this application may also be referred to as application program code. This is not specifically limited in embodiments of this application.

It should be noted that the communication apparatus in the foregoing embodiment may be a radio frequency device, may be a circuit, or may be a chip used in the radio frequency device, or another combined device, component, or the like that has a function of the radio frequency device. When the communication apparatus is a radio frequency device, the transceiver module may be a transceiver and may include an antenna, a radio frequency circuit, and the like, and the processing module may be a processor, for example, a central processing unit (central processing unit, CPU). When the communication apparatus is the component that has a function of the radio frequency device, the transceiver module may be a radio unit, and the processing module may be a processor. When the communication apparatus is the chip system, the communication apparatus may be a field programmable gate array (field programmable gate array, FPGA), an ASIC, a system on chip (system on chip, SoC), a CPU, a network processor (network processor, NP), a digital signal processing circuit (digital signal processor, DSP), a micro controller unit (micro controller unit, MCU), a programmable controller (programmable logic device, PLD), or another integrated chip. The processing module 502 may be a processor of the chip system. The transceiver module 701 or the communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and a transceiver.

For example, the communication apparatus in the foregoing embodiment may be a chip. The chip includes a logic circuit and an input/output interface, and may further include a memory. The input/output interface may be configured to receive code instructions (where the code instructions are stored in the memory, and may be directly read from the memory, or may be read from the memory through the another device), and transmit the code instructions to the logic circuit. The logic circuit may be configured to run the code instructions to perform the method in the foregoing method embodiments. Alternatively, the input/output interface may be a signal transmission interface circuit between the logic circuit and the transceiver.

An embodiment of this application further provides a computer-readable storage medium, including instructions. When the instructions are run on a computer, the computer is enabled to perform the method performed by the control device and the radio frequency device in FIG. 4.

An embodiment of this application further provides a computer program product, including instructions. When the instructions are run on a computer, the computer is enabled to perform the method performed by the control device and the radio frequency device in FIG. 4

An embodiment of this application provides a chip system. The chip system includes a processor, may further include a memory, and is configured to implement functions of the network device and the terminal device in the foregoing methods. The chip system may include a chip, or may include a chip and another discrete device.

All or some of the methods in embodiments of this application may be implemented by using software, hardware, firmware, or any combination thereof. When embodiments are implemented by software, all or some of embodiments may be implemented in a form of a computer program product. The computer program product includes one or more computer instructions. When the computer program instructions are loaded and executed on the computer, the procedure or functions according to embodiments are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, wherein the method comprises:
sending first information, wherein the first information indicates pilots corresponding to a plurality of terminal devices in a first user group, the pilots corresponding to the plurality of terminal devices in the first user group are mutually orthogonal, and the plurality of terminal devices in the first user group comprise terminal devices in at least two cells.

2. The method according to claim 1, wherein the method further comprises:
sending second information, wherein the second information indicates a control device associated with the first user group, and the control device is configured to process an uplink signal of a terminal device in the associated first user group.

3. The method according to claim 1 or 2, wherein the method further comprises:
sending third information, wherein the first information indicates the terminal devices comprised in the first user group.

4. The method according to any one of claims 1 to 3, wherein the method further comprises:
receiving uplink signals of a plurality of terminal devices in an associated second user group; and
performing joint demodulation on the uplink signals of the plurality of terminal devices in the second user group.

5. The method according to any one of claims 1 to 4, wherein the method further comprises:
obtaining channel measurement information corresponding to terminal devices in a plurality of cells; and
determining the plurality of terminal devices in the first user group based on the channel measurement information.

6. A communication method, wherein the method comprises:
receiving first information, wherein the first information indicates pilots corresponding to a plurality of terminal devices in a first user group, the pilots corresponding to the plurality of terminal devices in the first user group are mutually orthogonal, and the plurality of terminal devices in the first user group comprise terminal devices in at least two cells.

7. The method according to claim 6, wherein the method further comprises:
receiving second information, wherein the second information indicates a control device associated with the first user group, and the control device is configured to process an uplink signal of a terminal device in the associated first user group.

8. The method according to claim 7, wherein the method further comprises:
receiving a first uplink signal of a terminal device in the user group; and
sending a second uplink signal to the control device associated with the terminal device, wherein the second uplink signal is obtained based on the first uplink signal.

9. The method according to any one of claims 6 to 8, wherein the method further comprises:
sending fourth information, wherein the fourth information indicates a pilot corresponding to a terminal device in the user group.

10. A communication apparatus, comprising a module configured to perform the method according to any one of claims 1 to 9.

11. A communication apparatus, comprising at least one processor, wherein the at least one processor is configured to perform the method according to any one of claims 1 to 9.

12. A readable storage medium, wherein the storage medium stores a computer program or instructions, and when the computer program or the instructions are executed by a communication apparatus, the method according to any one of claims 1 to 9 is implemented.
